Europäisches Patentamt

European Patent Office

Office européen des brevets

(11) Publication number: **0 274 906 B1**

## EUROPEAN PATENT SPECIFICATION

(45) Date of publication of patent specification: **17.02.93** (51) Int. Cl.⁵: **C08F 297/08**, C08L 53/00

(21) Application number: **87311452.4**

(22) Date of filing: **24.12.87**

(54) **Method for the production of crosslinked olefinic block copolymers.**

(30) Priority: **26.12.86 JP 313746/86**
**26.12.86 JP 313747/86**
**26.12.86 JP 313748/86**

(43) Date of publication of application:
**20.07.88 Bulletin 88/29**

(45) Publication of the grant of the patent:
**17.02.93 Bulletin 93/07**

(84) Designated Contracting States:
**BE DE FR GB IT NL**

(56) References cited:
**EP-A- 0 149 828**
**US-A- 4 088 714**
**US-A- 4 247 652**

(73) Proprietor: **MITSUBISHI PETROCHEMICAL CO., LTD.**
**5-2, 2-chome, Marunouchi**
**Chiyoda-ku Tokyo 100(JP)**

(72) Inventor: **Gotoh, Shiro c/o Mitsubishi Petrochemical Co. Ltd.**
**Jushi Kenkyusho 1, Toho-Cho**
**Yokkaichi-Shi Mie-Ken(JP)**
Inventor: **Gotoh, Masahoro Mitsubishi Petrochemical Co. Ltd.**
**Jushi Kenkyusho 1, Toho-Cho**
**Yokkaichi-Shi Mie-Ken(JP)**

(74) Representative: **Laredo, Jack Joseph et al**
**Elkington and Fife Prospect House 8 Pembroke Road**
**Sevenoaks, Kent TN13 1XR (GB)**

Rank Xerox (UK) Business Services
(3.10/3.5x/3.0.1)

EP 0 274 906 B1

**Description**

BACKGROUND OF THE INVENTION

Field of the Invention

The present invention relates to a novel method for the production of crosslinked propylene-ethylene block copolymers useful as olefinic thermoplastic elastomers.

Statement of Prior Art

In recent years, flexible materials of excellent strength, heat resistance and impact resistance at low temperature have been increasingly desired in fields of interior and exterior automotive trims, electric appliance parts, electric wires and cables, pipes, various sheets, etc. As to soft materials, there are on the one hand available plasticized polyvinyl chloride, ethylene-vinyl acetate copolymers, ethylene-$\alpha$-olefin copolymers and the like. However, these are used for only limited purposes due to their poor heat resistance. Propylene-$\alpha$-olefin random copolymers have excellent heat resistance but are not only deficient in flexibility but also poor in impact resistance at low temperature. On the other hand, vulcanized rubber has excellent heat resistance and impact resistance but finds considerably limited use in view of its processability and difficulty encountered in its re-use.

As materials satisfying such performance, the use of thermoplastic elastomers is beginning. Of various thermoplastic elastomers, polyolefinic elastomers are enjoying wider use, since they are superior in weather resistance and chemical resistance to the rest, and can be produced at lower production costs.

The olefinic thermoplastic elastomers are generally produced by methods comprising hot-blending of ethylene-propylene rubber and polypropylene resin with optional application of partial crosslinking before or after blending, as disclosed in, e.g., Japanese Patent Laid-Open Publication No. 54-1386, US 3758643, US 3862106, US 3806558 and US 3835201. As far as we know, however, these methods have been in diminishing demand because of cost increases incidental to the blending step and, on the other hand, involved quality problems for the reason that the molecular design of the components to be blended have not necessarily been optimized to a sufficient level.

As a substitute for mechanical blending of ethylene-propylene rubber with polypropylene resin, there has been proposed a method for preparing both components in a polymerization vessel or vessels by the two-stage polymerization technique. This method may be advantageous in that the cost problem is avoidable as compared with mechanically blended products. Such methods are disclosed in, e.g., Japanese Patent Laid-Open Publication Nos. 55-80418, 57-10611, 57-10612 and US 4489195. As far as we know, however, the disclosed methods also have involved some problems. More specifically, the products obtained according to the method disclosed in Japanese patent Laid-Open Publication No. 57-10611 have been of unsatisfactory quality owing to their insufficient tensile strength and elongation. Referring to the methods disclosed in Japanese Patent Laid-Open Publication Nos. 57-10611 and 57-10612, tensile strength and elongation have been slightly improved but are still insufficient. Nor has heat resistance been satisfactory. With the method disclosed in US 4489195, it has been found that improvements in tensile properties are insufficient, and, at the same time, a problem of removing heat makes stable production difficult, partly because the polymerization temperature is low, and partly because considerable changes in temperature occur unavoidably.

SUMMARY OF THE INVENTION

As a result of studies we have made to solve the problems encountered in the prior art, it has been found that products having a specific gel percentage, derived from block copolymers obtained by crosslinking of copolymer blocks (A), (B) and (C) in a specific proportion, which have a specific composition and are obtained with the use of a specific catalyst, are well-balanced between tensile properties, heat resistance, processability and product appearance. On the basis of such findings, the present invention has been accomplished.

The method according to this invention for the production of crosslinked olefinic block copolymers is characterized by the following three requirements.

First Requirement

The catalyst used is selected from the following catalysts (I) and (II) of the Ziegler type.

(I) A Ziegler type catalyst comprising as the main components (i) a titanium trichloride composition obtained by reducing titanium tetrachloride with an organoaluminum compound and treating the reduced product with a complexing agent, and (ii) an organoaluminum compound.

(II) A Ziegler type catalyst comprising as the main components (i) a solid composition comprising magnesium, titanium and a halogen as essential components, (ii) an electron donor and (iii) an organoaluminum compound.

Second Requirement

With this catalyst, an olefinic block copolymer is prepared, which comprises 5 to 45% by weight of a propylene homopolymer block (A), 5 to 25% by weight of a binary random copolymer block (B) of propylene-ethylene having an ethylene content of at least 3% by weight to below 20% by weight and 50 to 90% by weight of a binary random copolymer block (C) of propylene-ethylene having an ethylene content of 20 to 40% by weight, and in which the proportion of the block (A) in the block combination of (A) and (B) is 50 to 90% by weight.

Third Requirement

A crosslinked product containing a component insoluble in hot xylenes in an amount of 5 to 50% by weight is obtained by kneading and thereby crosslinking the obtained block copolymer with an organic peroxide, a divinyl compound and an antioxidant at a temperature of 230°C or lower.

In accordance with the present invention, it is possible to obtain block copolymers which are well-balanced among various properties, as mentioned above.

The flexibility of the crosslinked olefinic block copolymers obtained by the present invention is about 50 to 98, preferably 65 to 95, as expressed in terms of ASTM-D-2240 Hardness.

The olefinic block copolymers according to the present invention come under the category of thermoplastic elastomers and, although crosslinked, can be shaped into various forms including sheets, since they possess the flow properties required for shaping.

DETAILED DESCRIPTION OF THE INVENTION

1. Catalysts

The catalysts used in the present invention are selected from the following Catalysts I and II of the Ziegler type.

Catalyst I

This catalyst comprises a specific titanium trichloride composition and an organoaluminum compound as the main components.

1) Titanium Trichloride Composition

The titanium trichloride composition comprises a solid product obtained by reducing titanium tetrachloride with an organoaluminum compound (in particular, one expressed by the general formula:

$$AlR_nX_{3-n}$$

wherein: R is a hydrocarbon residue having 1 to 18 carbon atoms; X is a halogen; and n is a number in the range of $0<n\leqq3$. By way of example, this compound may be selected from the catalyst component compounds to be described later), and further treating the thus reduced product with a complexing agent.

Details of such solid catalyst components are disclosed in Japanese Patent Laid-Open Publication No. 52-40348, US 4210738, US 4210735, CA 1084892, US 4210735 and GB 1518058, specifications. As disclosed therein, solids containing $TiCl_3$ and $AlCl_3$ in an atomic Ti to Al ratio of about 3:1 are converted to a solid product by treatment with a complexing agent for halogenated aluminum, which is freed of a

substantial portion of $AlCl_3$ and enriched with the $TiCl_3$ component, and which has a greatly increased specific surface area (ordinarily 75 $m^2/g$ or higher).

Products per se obtained by the reduction of titanium tetrachloride with an organoaluminum compound are known, and are commercially available on the market. Suitable examples of the complexing agent are described in the aforesaid published specifications. Preferably used in the present invention are mono- or di-ethers, thioethers, thiols, phosphines, stibines, arsines, amines, amides, ketones and esters, each having a total carbon atom number of about 4 to 16. Among others, particular preference is given to monoethers having a total carbon atom number of about 8 to 12 such as butyl ether, isoamyl ether and octyl ether.

For the treatment with the complexing agent, the titanium trichloride composition can be brought into contact with the complexing agent (preferably under agitation) at a temperature of about 0 to 80°C for at least 5 minutes, if required, in an inert liquid medium, and may optionally be washed with an inert liquid medium. Thereafter, this composition may be heat-treated at a temperature of about 80 to 200°C for about 30 minutes to 5 hours in an inert atmosphere, or is brought into contact with $TiCl_4$ or its hydrocarbon solution at a temperature of -30°C to +100°C, preferably 40 to 80°C for 30 minutes to 4 hours, preferably 1 to 3 hours, which step is then followed by filtration and washing with drying, if required. Such titanium trichloride is commercially available, and sold from Marubeni-Solvay Co., Ltd., e.g., in the form of titanium trichloride for olefine polymerization.

2) Organoaluminum Compound

The organoaluminum compound used in combination with the special titanium trichloride as mentioned above is suitably expressed by the general formula:

$AlR_nX_{3-n}$

wherein R, X and n have the same meanings as defined above. However, this compound can be identical with or different from that used for the preparation of the catalyst component.

Examples of such organoaluminum compounds include, for instance, (a) trialkyl aluminum such as triethyl aluminum, tri-i-butyl aluminum and tri-n-octyl aluminum, (b) alkyl aluminum hydrides such as diethyl aluminum hydride, (c) dialkyl aluminum halogenides such as diethyl aluminum chloride and diethyl aluminum iodide, (d) alkyl aluminum sesquihalogenides such as ethyl aluminum sesquichloride, and (e) alkyl aluminum dihalogenides such as ethyl aluminum dichloride (it is preferred that the alkyl have about 1 to 20 carbon atoms, and the halogen is chlorine, bromine and iodine). Particular preference is given to dialkyl aluminum halides such as diethyl aluminum chloride and diethyl aluminum iodide.

3) Optional Components

The catalyst must contain the titanium trichloride composition and organoaluminum compound as the essential coponents, but can include as the 3rd component various electron-donor compounds.

Such electron-donor compounds are detailed in, e.g., Japanese Patent Laid-Open Publication No. 54-39483 specification. Of these compounds, $\alpha$-, $\beta$- or aromatic unsaturated carboxylates such as methyl methacrylate and ethyl benzoate, ethers such as diethyl ether and ethylene glycol dimethyl ether, and amines such as trimethylamine and N,N,N′,N′-tetramethylethylenediamine are highly effective. Among others, such unsaturated carboxylates as mentioned above are particularly effective.

4) Catalyst Preparation

The catalysts can be prepared by bringing these components into contact with one another simultaneously or successively inside or outside the polymerization system.

Catalyst II

This catalyst contains as the main components a solid composition containing magnesium, titanium and a halogen as essential ingredients, an electron donor and an organoaluminum compound.

4

1) <u>Solid Composition</u>

The solid composition is a highly active solid cataylst component containing magnesium, titanium and a halogen as the essential ingredients. This solid catalyst may contain, in addition to said essential ingredients, other elements or inorganic or organic compounds, especially electron donors. The incorporation of electron donors is particularly preferable. The solid catalyst may further be diluted with an inorganic or organic diluent.

Such catalyst components can be prepared by the following methods.

Method 1

The activated, halogenated magnesium and titanium compound with the electron donor compound, if required, are simultaneously or stagewisely co-pulverized or brought into contact with each other in a liquid state. In either one of the processes, the halogenating agent may be brought into contact with the reactants at any stage (Japanese Patent Laid-Open Publication Nos. 53-45688 and 55-90510 specifications).

Method 2

The halogenating agent, reducing agent and the like are allowed to act upon the magnesium compound in a homogenized state in the absence or presence of the electron donor compound to obtain precipitates. Then, the titanium compound and, if required, the electron donor compound are brought into contact with such precipitates (Japanese Patent Laid-Open Publication Nos. 54-40293, 58-183708 and 58-183709 specifications and US 4330649).

Method 3

After the halogenating agent, reducing agent and the like have been allowed to act upon the organomagnesium compound such as a Grignard reagent, the electron donor and titanium compound are brought into contact with the resulting product (Japanese Patent Laid-Open Publication No. 52-14672, US 4159256 and US 4159963).

Of these methods, Method 2 is preferable.

As examples of the magnesium compounds to be used for the preparation of this solid catalyst component, magnesium oxide, magnesium hydroxide, hydroxy magnesium halides, magnesium dihalides, alkoxy magnesium halides, allyloxy magnesium halides, dialkoxy magnesium, diallyloxy magnesium, magnesium carboxylates, alkyl magnesium halides and dialkyl magnesium can be named.

The titanium compounds which can be used for the preparation of this solid composition are, for instance, tetrahalogenated titanium, alkoxytitanium halides, aryloxytitanium halides, alkoxytitanium and aryloxy titanium. Of these compounds, particular preference is given to titanium tetrachloride. Use may be also made of molecular compounds obtained by permitting the electron donor compounds to react with these titanium compounds.

The halogen atom that is one of the essential constituents of this solid composition is fluorine, chlorine, bromine or iodine, or a mixture thereof. Chlorine is particularly preferable.

Examples of the electron donor compounds used with this solid composition, if required, are oxygenated compounds such as esters of organic or inorganic acids, acid amides, acid halides, acid anhydrides, alkoxysilanes, ketones and ethers. Suitably used as the acids are organic acids, inter alia, aliphatic mono- to dibasic carboxylic acids having about 1 to 8 carbon atoms and aromatic mono- to dibasic carboxylic acids having about 7 to 12 carbon atoms. As esters that are one of the functional derivatives of the carboxyl groups of such acids, typically esters with monohydric or dihydric alcohols having about 1 to 12 carbon atoms can be mentioned. The alcohols used in this case can be ether alcohols. Particularly preferable in the present invention are organic acid esters such as butyl o-propionylbenzoate and diheptyl phthalate and acid halides such as phthaloyl chloride.

As to the quantitative ratios of the constituents of this solid composition, it is preferable that the molar Ti/Mg ratio be in a range of $1 \times 10^{-2}$ to 1, the molar halogen/Mg ratio be in a range of 0.5 to 4, and the molar electron donor compound/Mg ratio be in a range of $1 \times 10^{-2}$ to 1, when that electron donor compound is used.

2) Electron Donors

The followiing compounds (i) to (iv) are preferrd as the electron donors for improving the stereoregularity of propylene polymers.

(i) Organosilicon compounds expressed by the general formula:

$$R^4_e R^5_f Si (OR^6)_g X^2_h$$

wherein $R^4$, $R^5$ and $R^6$, which may be identical or different, each being a hydrocarbon residue having about 1 to 20 carbon atoms or a hydrogen atom, and $X^2$ is a halogen atom, provided that $e + f + g + h = 4$, $0 \leq e \leq 3$, $0 \leq f \leq 3$, $1 \leq g \leq 4$, and $0 \leq h \leq 3$.

These compounds can also be synthesized in situ, namely within the system. For instance, the compounds having a Si-O-C bond may be synthesized from phenyltrichlorosilane and alkoxy-containing compounds or alcohols. Exmaples of the compounds (i) are ethyl silicate, butyl silicate, phenyl silicate, methyltriethoxysilane, ethyltriethoxysilane, phenyltrimethoxysilane, phenyltriethoxysilane, methyltriphenoxysilane, vinyltriethoxysilane, dimethyldimethoxysilane, diethyldimethoxysilane, diphenyldimethoxysilane, phenylmethyldimethoxysilane, trimethylmethoxysilane, triphenylmethoxysilane and chlorotrimethoxysilane.

(ii) Ester Compounds

Examples of the compounds (ii) are ethyl acetate, Cellosolve acetate, methyl methacrylate, diethyl maleate, ethyl phenyl isolactate, ethyl benzoate, ethyl o-methoxy benzoate, diethyl phthalate and diheptyl phthalate. (For the rest of the compounds (ii), see the electron donors for the aforesaid solid compon
ent).

(iii) Ether Compounds

Examples of the compounds (iii) are diisoamyl ether, diphenyl ether, tetrahydrofuran and 1,8-cineole. Ether esters such as Cellosolve acetate may be deemed to be examples of the ether compounds.

(iv) Other Electron Donors

Peroxides such as dicumyl peroxide, phosphorus-containing compounds such as triethyl phosphite and amine compounds such as 2,2,6,6-tetramethylpiperidine can be mentioned by way of example.

Combinations of the electron donor compounds selected from one or a plurality of the aforesaid groups can be used as well.

Of such various electron donors, preference is given to the organosilicon compounds (i).

Unlike the electron donors used as the optional component for the aforesaid solid catalyst component, this electron donor is used at the time of polymerization to form a catalyst with the solid composition-organoaluminum compound. A suitable molar electron donor/organoaluminum compound ratio is thus in a range of 0.01 to 1.0, preferably 0.05 to 0.5.

3) Organoaluminum Compounds

The organoaluminum compounds referred to in the present disclosure expressed by the following general formula are suitable.

$$R^1_a \bullet R^2_b \bullet R^3_c \bullet AlX_d (OR^4)_e$$

wherein $R^1$, $R^2$, $R^3$ and $R^4$, which may be identical or different, each being a hydrocarbon residue having about 1 to 20 carbon atoms or a hydrogen atom, and X is a halogen atom, provided that $a + b + c + d + e = 3$, $0 \leq a \leq 3$, $0 \leq b \leq 3$, $0 \leq c \leq 3$, $0 \leq d \leq 3$, and $0 \leq e \leq 3$.

Examples of such compounds are (a) trialkyl aluminum such as triethyl aluminum, triisobutyl aluminum, trihexyl aluminum, and diethyl isobutyl aluminum, (b) alkyl aluminum halides such as diethyl aluminum monochloride, diisobutyl aluminum monochloride, ethyl aluminum sesquichloride and ethyl aluminum dichloride, (c) alkyl aluminum hydrides such as diethyl aluminum hydride and diisobutyl aluminum hydride, and (d) aluminum alkoxides or allyloxides such as diethyl aluminum ethoxide, diethyl aluminum butoxide and diethyl aluminum phenoxide. These compounds may be used alone or in combination.

The amount of the organoaluminum compounds used is preferably in a ratio range of 0.1 to 1,000 by weight with respect to the aforesaid solid composition.

2. Preparation of Block Polymers

The polymerization process of the present invention carried out in the presence of the catalyst selected from the aforesaid Catalysts I and II involves three stages (Steps i, ii and iii).

While the steps i, ii and iii may be carried out in any order, they are ordinarily performed in that order. Any one of the respective steps may be designed to comprise two or more sub-steps in which polymer blocks having different compositions can be prepared.

(1) Step i

Propylene is solely supplied to the polymerization system including the aforesaid catalyst to form a polymer in an amount corresponding to 5 to 45% by weight, preferably 7 to 35% by weight, more preferably 15 to 33% by weight of the overall polymerized amount. The homopolymer block A of propylene prepared in the step i is a highly crystallizable or crystalline constituent, which makes a contribution to imparting strength and heat resistance to the crosslinked block copolymers. If the amount of that constituent is below the aforesaid range, however, these physical properties will then be unattainable. If the amount of that constituent is above the aforesaid range, it will then be impossible to obtain various features resulting from the copolymer blocks B and C such as flexibility, tensile properties, low-temperature impact resistance and good exterior appearance.

It is to be understood that when the step i is carried out as one mode thereof with the aforesaid Catalyst I for the purpose of achieving such features, propylene can be supplied independently to the polymerization system including the aforesaid catalyst to form a polymer in an amount corresponding to 5 to 20% by weight, inter alia, 7 to 18% by weight of the overall polymerized amount.

It is also to be understood that when the aforesaid Catalyst I or II is used, propylene can be supplied independently to the polymerization system including the aforesaid catalyst to form a polymer in an amount corresponding to 15 to 45% by weight, inter alia, 15 to 35% by weight, particularly 17 to 33% by weight of the overall polymerized amount.

(2) Step ii

Preferably, subsequently to the step i, a propylene/ethylene mixture is supplied to the polymerization system to form a binary random copolymer block B of propylene/ethylene having an ethylene content of at least 3% by weight to below 20% by weight, preferably 4 to 17% by weight, more preferably 5 to 15% by weight in an amount corresponding to 5 to 25% by weight, preferably 7 to 25% by weight of the overall polymerized amount. The random copolymer block of propylene/ethylene prepared in the step ii has a composition intermediate between those of the aforesaid block A and the block C to be described later and contributes to improvements in the compatibility of both blocks A and C. Good tensile properties of the crosslinked block copolymers according to the present invention and excellent appearance of shaped articles obtainable therefrom are considered to be due to the presence of the block B permitting the compatibility of the blocks A and C to be enhanced, resulting in improvements in the homogeneity of the morphology of the crosslinked copolymer blocks. Therefore, degradations in appearance often take place when the amount of the block B is below the above-defined range, and the physical features resulting from the blocks A and C are unattainable. Especially with heat resistance in mind, it is of importance that the block A accounts for 50 to 90% by weight, preferably 50 to 80% by weight of the total weight of the blocks A and B. When the amount of the block A is below this range, there are remarkable reductions in heat resistance, which give rise to problems in connection with practical use.

Since the block B contributes to improvements in the compatibility of the other two blocks as mentioned above, degradation in appearance and reductions in tensile properties occur whenever the ethylene content departs from the above-defined range.

It is to be understood that when the step ii is carried out as one mode thereof with the aforesaid Catalyst I for the purpose of improving the compatibility of the blocks A and C (to be described later) by the presence of the block B, the block B can be formed in an amount corresponding to 5 to 15% by weight, inter alia, 7 to 15% by weight of the overall polymerized amount. It is also to be understood that when the aforesaid Catalyst I or II is employed, the block B can be formed in an amount corresponding to 5 to 25% by weight, inter alia, 10 to 25% by weight, particularly 10 to 22% by weight of the overall polymerized amount.

### (3) Step iii

Preferably, subsequently to the step ii, a propylene/ethylene mixture having a higher ethylene content is supplied to the polymerization system to form a random copolymer block C of propylene/ethylene having an ethylene content of 20 to 40% by weight, preferably 21 to 35% by weight in an amount corresponding to 50 to 90% by weight, preferably 50 to 85% by weight of the overall polymerized amount. The random copolymer block of propylene/ethylene prepared in the step iii is low-crystallizable or low-crystalline or amorphous in nature, and contributes to imparting flexibility and low-temperature impact resistance to the crosslinked products. When the amount of this block is below the above-defined range, these properties are unattainable, whereas when it exceeds the above-defined range, the object(s) of the present invention are unattainable because of excessive reductions in flexibility.

When the ethylene content is below the above-defined range, on the one hand, isotactic polypropylene chains are so increased that flexibility and low-temperature impact resistance are substantially lost, and when it exceeds that range, on the other hand, undesired drops in tensile properties in particular are brought about.

It is to be understood that when the step iii is carried out as one mode thereof with the aforesaid Catalyst I with a view to imparting flexibility and low-temperature impact resistance to the obtained block copolymers, the copolymer block C can be formed in an amount corresponding to 70 to 90% by weight, inter alia, 70 to 85% by weight of the overall polymerized amount. It is also to be understood that when the aforesaid Catalyst I or II is employed, the block C can be formed in an amount corresponding to at least 50% by weight to below 70% by weight, preferably 50 to 65% by weight inclusive of the overall polymerized amount.

The steps i, ii and iii are carried out at a polymerization temperature of the order of 20 to 80°C, preferably 50 to 70°C under a polymerization pressure of the order of 1 to 30 kg/cm²G.

### (4) Molecular Weight

In each of these steps, it is preferable to use a molecular weight modifier or regulator such as hydrogen.

The molecular weight of the block copolymer is expressed in terms of the average of the molecular weights of the copolymer blocks prepared in the three steps, and should be in a range corresponding to 0.02 to 50 g/10 min., preferably 0.05 to 20 g/10 min., more preferably 0.1 to 15 g/10 min., as expressed in terms of MFR according to ASTM-D-1238(L). When the block copolymer has a molecular weight below the above-defined range, its mechanical strength does not reach any practical level, whereas when it has a molecular weight exceeding that range, its viscoelastic properties are degraded in a molten state, thus rendering its granulation difficult. No particular limitation is placed on the molecular weights of the copolymer blocks prepared in the three steps. In general, however, the molecular weight of the copolymer block prepared in the step iii is equal to or higher than those of the copolymer blocks prepared in the other two steps.

### (5) Manner of Polymerization

The preparation of the copolymers according to the present invention can be carried out by any one of batchwise, continuous and semicontinuous methods. Alternatively, suspension or solution polymerization can be carried out in heptane or other inert hydrocarbons. In the second and/or third steps, addition of an organoaluminum compound, changes in the concentration of hydrogen and other procedures can be carried out.

### 3. Production of Crosslinked Products

In the present invention, it is an essential requirement that the block copolymers prepared by the aforesaid copolymerization be crosslinked.

The crosslinked products can be obtained by kneading the block copolymers in the presence of an organic peroxide acting as the crosslinking agent and a vinyl compound acting as the crosslinking aid.

The preferable organic peroxides are high-temperature decomposable type compounds exemplified by 2,5-dimethyl-di(t-butylperoxy)hexane, 2,5-dimethyl-2,5-di-(t-butylperoxy)hexyne-3, 2,5-dimethyl-2,5-

8

(benzoylperoxy)hexane, t-butylperoxy perbenzoate, dicumyl peroxide, di-t-butyl peroxide, t-butylcumyl peroxide, diisopropylbenzene hydroperoxide, benzoyl peroxide, p-chlorobenzoyl peroxide, methyl ethyl ketone peroxide and di-t-butyl-diperoxyphthalate, by way of example only.

The divinyl compounds to be used as the crosslinking aid are divinylbenzene, ethylene glycol dimethacrylate and dially phthalates, by way of example only.

The amounts of the crosslinking agent and aid to be used largely affect the degree of crosslinking and, hence, are an important factor. It is desired that the crosslinking agent be used in an amount of preferably 0.05 to 0.5 parts by weight, more preferably 0.08 to 0.3 parts by weight, and the crosslinking aid be employed in an amount of 0.05 to 1.0 part by weight, preferably 0.1 to 0.5 parts by weight. When the amounts of the crosslinking agent and aid exceed the above-defined ranges, the degree of crosslinking is so excessively increased that processability is remarkably degraded. When they are below such ranges, on the other hand, properties such as heat resistance are unattainble.

In the present disclosure, it should be noted that whenever the amount of each of the crosslinking agent, crosslinking aid and antioxidant (to be described later) used in the step of the production of the crosslinked products is expressed in terms of "parts by weight", it is based on 100 parts by weight of the block copolymers prepared in the aforesaid copolymerization step.

Crosslinking ordinarily relies upon the mechanical hot-kneading technique.

Crosslinking is carried out by mechanical hot-kneading with a hot-kneading machine such as an uniaxial or biaxial extruder or a Banbury mixer, and partial crosslinking is attained at the hot-kneading stage. The kneading temperature is 230°C or lower, preferably 160 to 220°C, more preferably 170 to 210°C. At too low a kneading temperature, difficulty is encountered in the melting of the block copolymers. A temperature exceeding that range is undesirable, since deterioration or abnormal crosslinking of the polymers proceeds to such an extent that their physical properties drop remarkably.

In some cases, improvements in the appearance of shaped articles may be achievable by previously subjecting the polymers to hot-kneading in the absence of any crosslinker before crosslinking them at the time of mechanical hot-kneading.

It is also an essential requirement to add the antioxidant at the time of crosslinking. Ordinarily, the antioxidant is used in the coexistence of the crosslinking agent and aid. Any suitable phenolic, sulfurous and phosphorous compounds generally used in the art can be usable as the antioxidant. The amount of the antioxidant to be used is 0.05 to 0.5 parts by weight, preferably 0.1 to 0.3 parts by weight. In an amount below the above-defined range, the effect of the antioxidant is greatly reduced, thus resulting in degradation of the appearance of shaped articles, which seem to be caused by deterioration or local crosslinking of the polymers. In an amount exceeding that range, on the other hand, the effect of the antioxidant is so increased that the efficiency of crosslinking drops to an undesirable level.

That the present crosslinked products produced by the method as described above are crosslinked and, moreover, excel in processability can be appreciated by the gel percentage measured in the form of a component insoluble in hot xylenes and the MFR (the measuring methods of which will be described later).

More specifically, the gel percentage of the present crosslinked products is 5 to 50% by weight, preferably 8 to 40% by weight, more preferably 10 to 35% by weight. If the gel percentage is below the above-defined range, then it is impossible to achieve an improvement in heat resistance, which is an object of the present invention. If it is above that range, on the ohter hand, then it is impossible to assure processability.

The melt-flow properties of the present crosslinked products are measured according to ASTM-D-1238-(L), and are desirably in a range of 0.01 to 30, preferably 0.01 to 20, more preferably 0.01 to 10. When the melt-flow properties are below the above-defined range, difficulty is experienced in processing. Higher melt-flow properties are unpreferred since, generally, the gel percentage is excessively decreased to achieve any improvements in heat resistance.

When one of the aforesaid block copolymers, i.e., a block copolymer comprising 5 to 20% by weight of the propylene homopolymer block A, 5 to 15% by weight of the binary random copolymer block B of propylene/ethylene having an ethylene content of at least 3% by weight to below 20% by weight and 70 to 90% by weight of the binary random copolymer block C of propylene/ethylene having an ethylene content of 20 to 40% by weight has been prepared in the aforesaid preparation step of the block copolymers, it is preferably for the purpose of the present invention that the gel percentage of the present crosslinked products be regulated to 5 to 50% by weight, preferably 10 to 40% by weight, more preferably 10 to 35% by weight, while the flow properties thereof are adjusted to 0.01 to 30, preferably 0.01 to 20, more preferably 0.01 to 10.

When the other of the aforesaid block copolymers, i.e., a block copolymer comprising 15 to 45% by weight of the propylene homopolymer block A, 5 to 25% by weight of the binary random copolymer block B

of propylene/ethylene having an ethylene content of at least 30% by weight to below 20% by weight and 50% by weight (inclusive) to 70% by weight (exclusive) of the binary random copolymer block C of propylene/ethylene having an ethylene content of 20 to 40% by weight has been prepared, it is preferable for the purpose of the present invention that the gel percentage of the present crosslinked products be regulated to 5 to 40% by weight, preferably 8 to 35% by weight, more preferably 10 to 30% by weight, while the flow properties thereof are adjusted to 0.01 to 30, preferably 0.02 to 20, more preferably 0.02 to 10.

With a view to further improving the melt-flow properties and flexibility of the present crosslinked products, it is possible to add thereto paraffinic or olefinic process oil. The amount of such oil to be added is 0 to 20 parts by weight, preferably 0 to 15 parts by weight. Excessive use of such oil is undesirable since it causes lowering of mechanophysical properties or bleeding-out of the oil.

The crosslinked products of the present invention can be used with general-purpose fillers blended therewith, such as carbon, various pigments, talc and glass fibers. It is also possible to control the physical properties of the present crosslinked products by the adition of propylene or ethylene base resins. If necessary, additives such as thermal stabilizers, antioxidants, ultraviolet absorbers and antistatic agents can be added to the present crosslinked products.

Experimental Examples

In the examples and comparison examples given below, the following testing methods were applied for the estimation of various properties.
(1) MFR in g/10 min.: ASTM-D-1238(L)
(2) Hardness [-]: ASTM-D-2240
(3) Tensile Strength in kg/cm$^2$ and Elongation in %: JIS-K-6301.
(4) Izod Impact Strength in kg·cm/cm: (Notched) ASTM-D-256.
(5) Gel Percentage in % by weight - Content of Component Insoluble in Hot Xylenes.
One gram of a sample is wrapped in an 80-mesh stainless-steel wire netting, and is extracted from hot xylenes for 10 hours in a Soxhlet extractor. Thereafter, the proportion of the unextracted matter with respect to the charged sample is determined.
(6) Compression Set in %: ASTM-D-395. (Method B, type 1 specimen, 70°C, 22 hr.)
(7) Gloss in %: ASTM-D-523.
(8) Gloss Change in %: ASTM-D-523.
This term refers to the rate of change in gloss between a sheet formed by press molding at 210°C and a Teflon sheet having a coarse surface, to which a load of 30 kg/cm$^2$ has been applied at 130°C for 20 seconds.
In the examples and comparison examples, the following additives were used at the time of crosslinking by kneading.
(1) Irganox® 1010: tetrakis[methylene-3-(3',5'-di-t-butyl-4'-hydroxyphenyl)propionate]methane manufactured by Ciba Geigy Co., Ltd.
(2) Antage BHT: 2,6-di-t-butyl-p-cresol manufactured by Yoshitomi Seiyaku Co., Ltd.
(3) BK: calcium stearate manufactured by Nittoh Kasei Kogyo Co., Ltd.
(4) Kayahexa AD: 2,5-dimethyl-2,5-di(t-butylperoxy)hexane manufactured by Kayaku Nouley Co., Ltd.

Example A1

In the presence of propylene gas, 30 liters of heptane, 2.8 g of titanium trichloride "TYY 25" manufactured by Marubeni-Solvay Co., Ltd. and 14 g of diethylaluminum chloride were placed in a stainless steel reactor having an internal volume of 100 liters and provided with agitating blades. While the internal temperature of the reactor was maintained at 60°C, propylene was introduced thereinto at a constant rate with the hydrogen concentration of the gaseous phase kept at 1.2% by volume in the meantime. At the time when the amount of the propylene introduced reached 2.0 kg, the supply of the propylene and hydrogen was interrupted, and the reactor was maintained as it was at 60°C for 5 minutes (Block A). Next, ethylene was admitted into the reactor at a constant rate. When the amount of the ethylene admitted reached 0.11 kg, the supply of the ethylene was interrupted, and the polymerizer was maintained as it was at 60°C for 5 minutes (Block B). After the completion of polymerization of Block B, the remaining propylene was immediately released to atmospheric pressure. Thereafter, while the polymerizer was kept at an internal temperature of 65°C, a mixed propylene/ethylene gas having an ethylene content of 32% by volume was introduced thereinto at a constant rate. At the time when the amount of the mixed gas admitted reached 3.7 kg, the supply thereof was interrupted (Block C).

The thus obtained block copolymer slurry was then treated at 60°C with butanol and was then amply washed with water to remove the catalyst residues. To this slurry were added 1,300 g of process oil PW 380 and 2.0 g of Irganox 1010. Subsequent steam stripping and then drying of this slurry produced 5.3 kg of a product.

Table 1 shows the composition and proportion of the blocks constituting the obtained block copolymer.

With the obtained block copolymer were blended 0.05 parts by weight of Irganox® 1010, 0.05 parts by weight of Antage BHT and 0.1 part by weight of BK to obtain a formulation, which was then granulated into pellets through a 40 Φ uniaxial extruder at 210°C. Then, 0.15 parts by weight of Kayahexa AD, 0.14 part by weight of divinylbenzene and 0.20 part by weight of Irganox 1010 were blended with these pellets, and the formulation thus obtained was kneaded/crosslinked together through a 40 Φ uniaxial extruder at 170°C. The thus crosslinked product was found to have an MFR of 0.01 g/10 min. and a gel percentage of 34% by weight.

The crosslinked product was formed through a 45 Φ T-die extruder at 200°C into a sheet of 0.3 mm in thickness, and the physical properties of this sheet were determined. The results are set forth in Table 1.

Comparison Example A1

A crosslinked product was obtained as in Example 1 except that the kneading temperature was 240°C during kneading/crosslinking. The crosslinked product was formed into a sheet similarly as in Example A1, but this resulted in only a sheet which was extremely degraded in appearance due to the presence of numerous hard spots. Thus, the physical properties of this sheet could not be determined.

Comparison Example A2

A crosslinked product was obtained as in Example 1 except that the kneading temperature was 200°C during kneading/crosslinking, and Irganox® 1010 omitted in the formulation to be kneaded/crosslinked. The crosslinked product was formed into a sheet similarly as in Example A1. However, since a number of hard spots were found on and in this sheet, its physical properties could not be determined.

Comparison Examples A3 and A4

Crosslinked products were obtained as in Example 1 except that the formulations to be kneaded/crosslinked contained 0.55 part by weight of divinylbenzene (Comp. Ex.A3) and 0.60 parts by weight of Kayahexa AD (Comp. Ex. A4). The crosslinked products were formed into sheets similarly as in Example A1. However, since a number of hard spots were found in and on such sheets, determination of their physical properties could not be made.

Example A2

In the presence of propylene gas, 150 liters of heptane, 5.0 g of titanium trichloride "TYY 25" manufactured by Marubeni-Solvay, Co., Ltd. and 25 g of diethylaluminum chloride were placed in a stainless-steel reactor having an internal volume of 400 liters and provided with agitating blades. While the internal temperature of the reactor was maintained at 60°C, propylene was introduced thereinto at a constant rate with the hydrogen concentration of the gaseous phase kept at 4.3% by volume in the meantime. At the time when the amount of propylene introduced reached 3.8 kg, the introduction of propylene and hydrogen was interrupted (Block A). Subsequently, ethylene was introduced into the reactor at a constant rate. When the amount of ethylene thus supplied reached 0.135 kg, the supply of the enthylene was interrupted, and the polymerizer was maintained as it was at 60°C for 5 minutes (Block B). After the completion of polymerization of Block B, the remaining propylene was immediately released to atmospheric pressure. Thereafter, while the reactor was kept at an internal temperature of 65°C, a mixed propylene/ethylene gas having an ethylene content of 29% by volume was introduced thereinto at a constant rate with the hydrogen concentration of the gaseous phase kept at 0.02% by volume in the meantime. At the time when the amount of the mixed gas thus supplied reached 4.2 kg, the supply thereof was interrupted, and the polymerizer was maintained as it was at 65°C for 15 minutes (Block C).

The thus obtained block copolymer slurry was treated at 60°C with butanol and was then amply washed with water to remove the catalyst residues. To this slurry were added 1,900 g of process oil PW 380 manufactured by Idemitsu Kagaku Co., Ltd. and 7.0 g of Irganox® 1010. Subsequent steam stripping and then drying of this slurry resulted in 15 kg of a product.

Table 1 shows the composition and proportion of the blocks constituting the obtained block copolymer.

With the obtained block copolymer was blended 0.1 part by weight of BK to obtain a formulation, which was then granulated into pellets through a 40 Φ uniaxial extruder at 210°C. Then, 0.12 parts by weight of Kayahexa AD, 0.11 part by weight of divinylbenzene and 0.20 part by weight of Irganox® 1010 were blended with these pellets, and the thus obtained formulation was kneaded/crosslinked together through a 40 Φ uniaxial extruder at 170°C. The thus crosslinked product was found to have an MFR of 0.09 g/10 min. and a gel percentage of 17% by weight.

The crosslinked product was formed through a 45 Φ T-die extruder at 200°C into a sheet of 0.3 mm in thickness, and the physical properties of this sheet were determined. The results are set forth in Table 1.

Comparison Example A5

A copolymer was prepared, crosslinked and formed into a sheet as in Example A2 except that the ethylene content of the mixed propylene/ethylene gas was changed to 56% by volume when Block C was prepared. The results are set forth in Table 1.

Comparison Example A6

A copolymer was prepared, crosslinked and formed into a sheet as in Example A2 except that the instant of time of feeding of the ethylene in the preparation of Block B was changed to 15 minutes after the initiation of supply of propylene in the preparation of Block A, and the feed rate of ethylene was decreased to 30%. The results are set forth in Table 1.

Comparison Example A7

A copolymer was prepared, crosslinked and formed into a sheet as in Example A2 except that the amount of propylene supplied in the preparation of Block A was 13.0 kg, and Block B was not prepared. The results are set forth in Table 1.

Comparison Example A8

A crosslinked product was obtained as in Example A2 except that the formulation kneaded/crosslinked contained 0.60 part by weight of Kayahexa AD and 0.55 part by weight of divinylbenzene. This crosslinked product did not flow at all, so that its MFR could not be measured, and was found to have a gel percentage of 57% by weight.

The crosslinked product was formed into a sheet in a manner similar to that described in Example A2. However, the obtained sheet had an irregular surface and was greatly degraded in appearance.

Example A3

A copolymer was obtained in a manner similar to that described in Example A2 However, the amount of propylene supplied and the hydrogen concentration were respectively 5.3 kg and 3.4% by volume in the preparation of Block A; the amount of ethylene supplied was 0.24 kg in the preparation of Block B; and the ethylene content of the mixed propylene/ethylene gas and the hydrogen concentration were respectively 31% by weight and 1.0% by volume in the preparation of Block C. The results are set forth in Table 1. The obtained copolymer was crosslinked and formed into a sheet in a manner similar to that described in Example A2. The results are set forth in Table 1.

Example B1

1) Synthesis of Solid Catalyst Component

Into a one-liter flask sufficiently purged therein with nitrogen were introduced 200 ml of sufficiently dehydrated and deoxygenated n-heptane and, then, 0.2 mole of $MgCl_2$ and 0.4 mole of $Ti(OC_4H_9)_4$ for a 2-hour reaction at 95°C. After completion of the reaction, the temperature was decreased to 40°C, and 30 ml of methylhydropolysiloxane was added for a 3-hour reaction. After completion of the reaction, the thus formed solid component was washed with n-heptane.

One hundred (100) ml of n-heptane was placed in a 0.5-liter flask sufficiently purged therein with nitrogen, and 0.09 mole, calculated as atomic Mg, of the aforesaid catalyst component was introduced. Subsequently, 0.15 mole of $SiCl_4$ was introduced at 30°C over 30 minutes for a one-hour reaction at 70°C. Further, 0.012 mole phenylethoxysilane was added for a one-hour reaction at 70°C. After the completion of the reaction, the reaction product was washed with n-heptane.

Then, 0.009 mole of diheptyl phthalate was added at 30°C over 30 minutes for a one-hour reaction at 50°C. After completion of the reaction, the reaction product was washed with n-heptane.

Finally, 25 ml of $TiCl_4$ was added for a two-hour reaction at 100°C. After completion of the reaction, the reaction product was washed with n-heptane to obtain a solid composition.

The thus obtained solid composition carried 2.4% by weight of Ti.

2) Polymerization

In the presence of propylene gas, 35 liters of heptane, 0.50 g of the aforesaid solid component, 8.8 g of triethylaluminum and 3.8 g of diphenyldimethoxysilane were introduced into a stainless-steel reactor having an internal volume of 100 liters and provided with agitating blades. While the internal temperature of the reactor was maintained at 65°C, propylene was introduced thereinto at a constant rate. At the time when the amount of propylene introduced reached 3.2 kg, the introduction of propylene and hydrogen was interrupted, and the reactor was maintained as it was at 65°C for 10 minutes (Block A). Subsequently, ethylene was supplied into the reactor at a constant rate. When the amount of ethylene supplied reached 0.095 kg, its supply was interrupted, and the reactor was maintained as it was at 65°C for 2 minutes (Block B). After the completion of the polymerization of Block B, the remaining propylene was immediately released to atmospheric pressure. Thereafter, while the reactor was kept at an internal temperature of 65°C, a mixed propylene/ethylene gas having an ethylene content of 32% by volume was introduced thereinto at a constant rate. At the time when the amount of the mixed gas supplied reached 4.4 kg, the supply thereof was interrupted, and the reactor was maintained as it was at 65°C for 10 minutes (Block C).

The obtained block copolymer slurry was treated at 60°C with butanol, and amply washed with water to remove the catalyst residues. Subsequent steam stripping and then drying of this slurry resulted in 4.5 kg of a product.

Table 2 shows the composition and proportion of the blocks constituting the obtained block copolymer.

Blended with the obtained block copolymer were 0.05 parts by weight of Irganox® 1010, 0.05 parts by weight of Antage BHT and 0.1 part by weight of BK to obtain a formulation, which was then granulated into pellets through a 40 Φ uniaxial extruder at 210°C. Then, 0.14 part by weight of Kayahexa AD, 0.13 part by weight of divinylbenzene and 0.20 part by weight of Irganox 1010 were blended with these pellets, and the formulation thus obtained was kneaded/crosslinked together through a 40 Φ uniaxial extruder at 170°C. The thus crosslinked product was found to have an MFR of 0.07 g/10 min. and a gel fraction of 24% by weight.

The crosslinked product was formed through a 45 Φ T-die extruder at 200°C into a sheet of 0.3-mm thickness, and the physical properties thereof were estimated. The results are set forth in Table 2.

Comparison Example B1

A crosslinked product was obtained as in Example 11 except that the kneading temperature during kneading/crosslinking was 240°C. The crosslinked product was formed into a sheet in a manner similar to that described in Example A1, but only a sheet which was extremely degraded in appearance due to the presence of numerous hard spots was obtained. Thus, the physical properties of this sheet could not be determined.

Comparison Example B2

A crosslinked product was obtained as in Example 11 except that the kneading temperature during kneading/crosslinking was 200°C, and the formulation kneaded/crosslinked did not contain Irganox® 1010. The crosslinked product was formed into a sheet similarly as described in Example 11. However, since a number of hard spots were found on and in the sheet, determination of its physical properties could not be made.

Comparison Examples B3 and B4

Crosslinked products were obtained as in Example 11 except that the formulations kneaded/crosslinked contained 0.55 part by weight of divinylbenzene (Comp. Ex. B3) and 0.60 parts by weight of Kayahexa AD (Com. Ex. B4). The crosslinked products were formed into sheets in a manner similar to that described in Example B1. However, since a number of hard spots were found in and on such sheets, their physical properties could not be determined.

Comparison Example B5

A crosslinked product was obtained as in Example A2 except that the formulation kneaded/crosslinked contained 0.60 part by weight of Kayahexa Ad and 0.55 part by weight of divinylbenzene. This crosslinked product did not flow at all, so that its MFR could not be measured, and was found to have a gel percentage of 55% by weight.

The crosslinked product was formed into a sheet in a manner similar to that described in Example A2. However, only a sheet which was irregular on its surface and degraded in appearance was obtained.

Comparison Example B6

A copolymer was prepared, crosslinked and formed into a sheet as in Example B1 except that the amount of propylene supplied was 3.3 kg in the preparation of Block A, and Block B was not prepared. The results are set forth in Table 1.

Example B2

1) Synthesis of Solid Catalyst Component

Into a ten-liter flask amply replaced therein with nitrogen were introduced 2 liters of amply dehydrated and deoxygenated n-heptane and, then, 2 moles of $MgCl_2$ and 4 moles of $Ti(OC_4H_9)_4$ for a 2-hour reaction at 95°C. After the completion of the reaction, the temperature was decreased to 40°C, and 300 ml of methylhydropolysiloxane was introduced for a 3-hour reaction. After the completion of the reaction, the formed solid component was washed with n-heptane.

One (1) liter of n-heptane was then placed in a 5-liter flask amply replaced therein with nitrogen, and 0.9 moles, calculated as atomic Mg, of the aforesaid catalyst cmponent was introduced. Subsequently, 1.5 moles of $SiCl_4$ was introduced at 30°C over 30 minutes for one-hour reaction at 70°C. Further, 0.12 mole phenylethoxysilane was added for a one-hour reaction at 70°C. After the completion of the reaction, the reaction product was washed with n-heptane.

Then, 0.09 moles of phthaloyl chloride was introduced at 30°C over 30 minutes for a one-hour reaction at 50°C. After the completion of the reaction, the reaction product was washed with n-heptane.

Finally, 250 ml of $TiCl_4$ was added for a two-hour reaction at 100°C. After the completion of the reaction, the reaction product was washed with n-heptane to obtain a solid composition.

The thus obtained solid composition carried 2.4% by weight of Ti.

2) Polymerization

In the presence of propylene gas, 35 liters of heptane, 0.50 g of the aforesaid solid component, 3.7 g of triethylaluminum and 1.1 g of 2,2,6,6-tetramethylpiperidine were placed in a stainless-steel reactor having an internal volume of 100 liters and provided with agitating blades. While the internal temperature of the polymerizer was maintained at 75°C, propylene was introduced thereinto at a constant rate. At the time when the amount of propylene introduced reached 2.2 kg, the introduction of propylene was interrupted (Block A). Subsequently, ethylene was supplied into the reactor at a constant rate. When the amount of ethylene introduced reached 0.055 kg, the supply of ethylene was interrupted, and the reactor was maintained as it was at 75°C for 2 minutes (Block B). After the completion of polymerization of Block B, the remaining propylene was immediately released to atmospheric pressure. Thereafter, while the reactor was kept at an internal temperature of 60°C, a mixed propylene/ethylene gas having an ethylene content of 33% by volume was introduced thereinto at a constant rate. At the time when the amount of the mixed gas admitted reached 3.9 kg, the supply thereof was interrupted, and the polymerizer was maintained as it was at 60°C for 20 minutes (Block C).

14

The obtained block copolymer slurry was treated at 60°C with butanol and was then amply washed with water to remove the catalyst residues. To this slurry were added 700 g of process oil PW 380 manufactured by Idemitsu Kagaku Co., Ltd. and 2.5 g of Irganox® 1010. Subsequent steam stripping and then drying of this slurry resulted in 5.2 kg of a product.

Table 2 shows the composition and proportion of the blocks constituting the obtained block copolymer.

With the obtained block copolymer was blended 0.1 part by weight BK to obtain a formulation, which was then granulated into pellets through a 40 Φ uniaxial extruder at 210°C. Then, 0.17 part by weight of Kayahexa AD, 0.16 part by weight of divinylbenzene and 0.20 part by weight of Irganox® 1010 were blended with these pellets, and the obtained formulation was kneaded/crosslinked together through a 40 Φ uniaxial extruder at 170°C. The thus crosslinked product was found to have an MFR of 0.02 g/10 min. and a gel percentage of 30 parts by weight.

The crosslinked product was formed through a 45 Φ T-die extruder at 200°C into a sheet of 0.3-mm thickness, and the physical properties of this sheet were determined. The results are set forth in Table 2.

Comparison Example B7

A copolymer was prepared, crosslinked and formed into a sheet as in Example B2, except that the ethylene content of the mixed propylene/ethylene gas was 56% by volume in the preparation of Block C. The results are set forth in Table 2.

Comparison Example B8

A copolymer was prepared, crosslinked and formed into a sheet as in Example B2 except that the instant of time for feeding the ethylene in the preparation of Block B was changed to 15 minutes after the initiation of supply of propylene in the preparation of Block A, and the rate of supply of ethylene was decreased to 30%. The results are set forth in Table 2.

Example C1

In the presence of propylene gas, 30 liters of heptane, 2.8 g of titanium trichloride "TYY 25" manufactured by Marubeni-Solvay, Co., Ltd. and 14 g of diethylaluminum chloride were introduced into a stainless-steel reactor having an internal volume of 100 liters and provided with agitating blades. While the internal temperature of the reactor was maintained at 60°C, propylene was introduced thereinto at a constant rate with the hydrogen concentration of the gaseous phase kept at 2.1% by volume in the meantime. At the time when the amount of propylene introduced reached 4.4 kg, the introduction of propylene and hydrogen was interrupted, and the reactor was maintained as it was at 60°C for 5 minutes (Block A). Subsequently, ethylene was fed into the reactor at a constant rate. When the amount of ethylene fed reached 0.075 kg, the supply of ethylene was interrupted, and the reactor was maintained as it was at 60°C for 15 minutes (Block B). After the completion of polymerization of Block B, the remaining propylene was immediately released to atmospheric pressure. Thereafter, while the reactor was kept at an internal temperature of 65°C, a mixed propylene/ethylene gas having an ethylene content of 32% by volume was introduced thereinto at a constant rate, the hydrogen concentration of the gaseous phase being kept at 3.8% by volume in the meantime. At the time when the amount of the mixed gas fed reached 5.2 kg, the supply thereof was interrupted, and the polymerizer was maintained as it was at 65°C for 10 minutes (Block C).

The obtained block copolymer slurry was treated at 60°C with butanol and was then amply washed with water to remove the catalyst residues. Subsequent steam stripping and then drying of this slurry produced 7.8 kg of a product.

Table 3 shows the compositions and proportions of the blocks constituting the obtained block copolymer.

With the obtained block copolymer were blended 0.05 part by weight of Irganox® 1010, 0.05 part by weight of Antage BHT and 0.1 part by weight of BK to obtain a formulation, which was then granulated into pellets through a 40 Φ uniaxial extruder at 210°C. Then, 0.20 part by weight of Kayahexa AD, 0.18 part by weight of divinylbenzene and 0.20 part by weight of Irganox 1010 were blended with the pellets, and the obtained formulation was kneaded/crosslinked together through a 40 Φ uniaxial extruder at 170°C. The thus crosslinked product was found to have an MFR of 0.10 g/10 min. and a gel percentage of 29% by weight.

The crosslinked product was formed through a 45 Φ T-die extruder at 200°C into a sheet of 0.3-mm thickness, and the physical properties of this sheet were determined. The results are set forth in Table 3.

15

Comparison Example C1

A crosslinked product was obtained as in Example C1 except that the kneading temperature during kneading/crosslinking was 240°C. The crosslinked product was formed into a sheet in a manner similar to that described in Example A1, but only a sheet which was extremely degraded in appearance due to the presence of numerous hard spots was obtained. Thus, the physical properties of this sheet could not be determined.

Comparison Example C2

A crosslinked product was obtained as in Example C1, except that the kneading temperature during kneading/crosslinking was 200°C, and the formulation kneaded/crosslinked did not contain Irganox® 1010. The crosslinked product was formed into a sheet in a manner similar to that described in Example C1. However, since a number of hard spots were found on and in that sheet, determination of its physical properties could not be made.

Comparison Examples C3 and C4

Crosslinked products were obtained as in Example C1 except that the formulations kneaded/crosslinked contained 0.55 part by weight of divinylbenzene (Comp. Ex. C3) and 0.60 part by weight of Kayahexa AD (Com. Ex. C4). The crosslinked products were formed into sheets in a manner similar to that described in Example C1. However, since a number of hard spots were found in and on such sheets, their physical properties could not be determined.

Example C2

In the presence of propylene gas, 100 liters of heptane, 12.0 g of titanium trichloride "TYY 25" manufactured by Marubeni-Solvay, Co., Ltd. and 60 g of diethylaluminum chloride were introduced into a stainless-steel reactor having an internal volume of 400 liters and provided with agitating blades. While the internal temperature of the reactor was maintained at 60°C, propylene was introduced thereinto at a constant rate, the hydrogen concentration of the gaseous phase being kept at 6.5% by volume in the meantime. At the time when the amount of propylene introduced reached 10.6 kg, the introduction of propylene and hydrogen was interrupted, and the reactor was maintained as it was at 60°C for 40 minutes (Block A). After the completion of polymerization for Block A, the remaining propylene was immediately released to atmospheric pressure. Thereafter, while the reactor was kept at an internal temperature of 65°C, a mixed propylene/ethylene gas having an ethylene content of 38% by volume was introduced thereinto at a constant rate with the hydrogen concentration of the gaseous phase kept at 2.5% by volume. At the time when the amount of the mixed gas admitted reached 16.7 kg, the supply thereof was interrupted (Block C). Subsequently, while the hydrogen concentration of the gaseous phase was changed to 6.5% by volume, a mixed propylene/ethylene gas having an ethylene content of 7.5% by volume was supplied into the polymerizer at a constant rate. When the amount of the mixed gas supplied reached 3.6 kg, the supply thereof was interrupted, and the reactor was maintained as it was at 65°C for 10 minutes (Block B).

The obtained block copolymer slurry was treated at 60°C with butanol and was then amply washed with water to remove the catalyst residues. Subsequent steam stripping and then drying of this slurry produced 26 kg of a product. Table 3 shows the compositions and proportions of the blocks constituting the obtained block copolymer.

With the obtained block copolymer were blended 0.05 part by weight of Irganox® 1010, 0.05 part by weight of Antage BHT and 0.1 part by weight of BK to obtain a formulation, which was then granulated into pellets through a 40 Φ uniaxial extruder at 210°C. Then, 0.10 part by weight of Kayahexa AD, 0.09 part by weight of divinylbenzene and 0.20 part by weight of Irganox 1010 were blended with the pellets, and the obtained formulation was kneaded/crosslinked together through a 40 Φ uniaxial extruder at 170°C. The thus crosslinked product was found to have an MFR of 1.1 g/10 min. and a gel percentage of 11 parts by weight.

The crosslinked product was formed through a 45 Φ T-die extruder at 200°C into a sheet of 0.3-mm thickness, and the physical properties of that sheet were determined. The results are set forth in Table 3.

Comparison Example C5

A crosslinked product was obtained as in Example C2 except that the formulation kneaded/crosslinked contained 0.60 part by weight of Kayahexa AD and 0.55 part by weight of divinylbenzene. This crosslinked product did not flow at all, so that its MFR could not be measured, and was found to have a gel fraction of 57% by weight.

The crosslinked product was formed into a sheet in a manner similar to that described in Example C2. However, the obtained sheet was irregular on its surface, and was greatly degraded in appearance.

Comparison Example C6

A copolymer was prepared, crosslinked and formed into a sheet as in Example C2 except that the amount of propylene supplied in the preparation of Block A was 13.0 kg, and Block B was not prepared. The results are set forth in Table 3.

Example C3

In the presence of propylene gas, 140 liters of heptane, 12.5 g of titanium trichloride "TYY 25" manufactured by Marubeni-Solvay, Co., Ltd. and 62 g of diethylaluminum chloride were placed in a stainless-steel reactor having an internal volume of 400 liters and provided with agitating blades. While the internal temperature of the reactor was maintained at 60°C, propylene was introduced thereinto at a constant rate while the hydrogen concentration of the gaseous phase was kept at 2.2% by volume. At the time when the amount of propylene introduced reached 15.8 kg, the introduction of propylene and hydrogen was interrupted, and the reactor was maintained as it was at 60°C for 40 minutes (Block A). After the completion of polymerization for Block A, the remaining propylene was immediately released to atmospheric pressure. Thereafter, while the reactor was kept at an internal temperature of 65°C, a mixed propylene/ethylene gas having an ethylene content of 21% by volume was introduced thereinto at a constant rate while the hydrogen concentration of the gaseous phase was kept at 0.5% by volume. At the time when the amount of the mixed gas admitted reached 8.3 kg, the ethylene content of the mixed propylene/ethylene gas was changed to 38% by volume, while the hydrogen concentration of the gaseous phase was maintained at 1.3% by volume. At the time when the amount of the mixed gas supplied reached 19.5 kg, the supply thereof was interrupted, and the reactor was maintained as it was at 65°C for 5 minutes (Blocks B + C).

The obtained block copolymer slurry was treated at 60°C with butanol, and was then amply washed with water to remove the catalyst residues. Subsequent steam stripping and then drying of this slurry produced 36 kg of a product.

Table 3 shows the composition and proportion of the blocks constituting the obtained block copolymer.

With the obtained block copolymer were blended 0.05 part by weight of Irganox® 1010, 0.05 part by weight of Antage BHT and 0.1 part by weight of BK to obtain a formulation, which was then granulated into pellets through a 40 Φ uniaxial extruder at 210°C. Then, 0.15 part by weight of Kayahexa AD, 0.14 part by weight of divinylbenzene and 0.20 part by weight of Irganox 1010 were blended with the pellets, and the obtained formulation was kneaded/crosslinked together through a 40 Φ uniaxial extruder at 170°C. The thus crosslinked product was found to have an MFR of 0.16 g/10 min. and a gel percentage of 21% by weight.

The crosslinked product was formed through a 45 Φ T-die extruder at 200°C into a sheet of 0.3-mm thickness, and the physical properties of this sheet were determined. The results are set forth in Table 3.

Example C4

In the presence of propylene gas, 30 liters of heptane, 2.0 g of titanium trichloride "TYY 25" manufactured by Marubeni-Solvay, Co., Ltd. and 10 g of diethylaluminum chloride were placed in a stainless-steel reactor having an internal volume of 100 liters and provided with agitating blades. While the internal temperature of the polymerizer was maintained at 60°C, propylene was introduced thereinto at a constant rate while the hydrogen concentration of the gaseous phase was kept at 2.2% by volume. At the time when the amount of propylene introduced reached 2.2 kg, the introduction of propylene and hydrogen was interrupted (Block A). Subsequently, ethylene was supplied at a constant rate. When the amount of ethylene supplied reached 0.095 kg, the supply of ethylene was interrupted, and the reactor was maintained as it was at 60°C for 10 minutes (Block B). After the completion of polymerization of Block B, the remaining propylene was immediately released to atmospheric pressure. Thereafter, while the reactor was kept at an internal temperature of 65°C, a mixed propylene/ethylene gas having an ethylene content of 33% by volume was introduced thereinto at a constant rate with the hydrogen concentration of the gaseous phase kept at 0.05% by volume in the meantime. At the time when the amount of the mixed gas fed reached 3.2 kg, the supply thereof was interrupted, and the reactor was maintained as it was at 65°C for 2 minutes (Block C).

The obtained block copolymer slurry was treated at 60°C with butanol and was then amply washed with water to remove the catalyst residues. To the slurry were added 700 g of process oil PW 380 manufactured by Idemitsu Kagaku Co., Ltd. and 2.5 g of Irganox® 1010. Subsequently steam stripping and then drying of this slurry were carried out to produce 5.2 kg of a product.

Table 3 shows the composition and proportion of the blocks constituting the obtained block copolymer.

0.1 part by weight of BK was blended with the obtained block copolymer to obtain a formulation, which was then granulated into pellets through a 40 Φ uniaxial extruder at 210°C. Then, 0.10 part by weight of Kayahexa AD, 0.09 part by weight of divinylbenzene and 0.20 part by weight of Irganox® 1010 were blended with the pellets, and the obtained formulation was kneaded/crosslinked together through a 40 Φ uniaxial extruder at 170°C. The thus crosslinked product was found to have an MFR of 0.02 g/10 min. and a gel fraction of 30% by weight.

The crosslinked product was formed through a 45 Φ T-die extruder at 200°C into a sheet of a thickness of 0.3 mm, and the physical properties thereof were determined. The results are set forth in Table 3.

Comparison Example C7

A copolymer was prepared, crosslinked and formed into a sheet as in Example C4 except that the ethylene content of the mixed propylene/ethylene gas was changed to 56% by volume in the preparation of Block C. The results are set forth in Table 3.

Comparison Example C8

A copolymer was prepared, crosslinked and formed into a sheet as in Example C4, except that the point of time of feed of ethylene in the preparation of Block B was changed to 15 minutes after the initiation of supply of propylene in the preparation of Block A, and the rate of supply of ethylene was decreased to 30%. The results are set forth in Table 3.

Table 1

| Experimental Example | | | Exam. A1 | Exam. A2 | Comp. Exam. A5 | Comp. Exam. A6 | Comp. Exam. A7 | Exam. A3 |
|---|---|---|---|---|---|---|---|---|
| Block (A) | Proportion | (wt.%) | 18 | 10 | 10 | 3* | 18 | 13 |
| | MFR | (g/10 min.) | 0.89 | 7.1 | 7.0 | 7.0 | 7.3 | 3.4 |
| Block (B) | Proportion | (wt.%) | 10 | 8 | 8 | 15* | 0* | 11 |
| | Ethylene Content | (wt.%) | 14 | 11 | 11 | 5.8 | - | 13 |
| Block (C) | Proportion | (wt.%) | 72 | 82 | 82 | 82 | 82 | 76 |
| | Ethylene Content | (wt.%) | 27 | 22 | 50* | 22 | 22 | 30 |
| Copolymer | MFR | (g/10 min.) | 0.15 | 0.22 | 0.17 | 0.21 | 0.25 | 0.23 |
| Crosslinked product | MFR | (g/10 min.) | 0.01 | 0.09 | 0.03 | 0.08 | 0.10 | 0.01 |
| | Gel Percentage | (wt.%) | 34 | 17 | 26 | 18 | 13 | 22 |
| Physical Properties of sheet | Hardness | (-) | 70 | 68 | 65 | 67 | 82 | 80 |
| | Tensile Strength at Rupture | (kg/cm$^2$) | 115 | 102 | 55* | 100 | 120 | 160 |
| | Tensile Elongation at Rupture | (%) | 770 | 830 | 740 | 840 | 490* | 830 |
| | Izod Impact Strength(-40°C) | (kg·cm/cm) | NB | NB | NB | NB | NB | NB |
| | Compression Set | (%) | 44 | 52 | 50 | 63* | 51 | 50 |
| Press Molded Sheets | Gloss | (%) | 62 | 65 | 64 | 66 | 55 | 70 |
| | Gloss Change | (%) | 55 | 48 | 48 | 13* | 65 | 45 |

Mark    *:   stands for products departing from the presently claimed scope or having unsatisfactory physical properties.

NB:   No Rupture

EP 0 274 906 B1

Table 2

| Experimental Example | | | Exam. B1 | Comp. Exam. B6 | Exam. B2 | Comp. Exam. B7 | Comp. Exam. B8 |
|---|---|---|---|---|---|---|---|
| Block (A) | Proportion | (wt.%) | 28 | 45 | 22 | 22 | 4* |
| | MFR | (g/10 min.) | 1.1 | 1.2 | 1.2 | 1.2 | 1.3 |
| Block (B) | Proportion | (wt.%) | 17 | 0* | 14 | 14 | 32* |
| | Ethylene Content | (wt.%) | 5.2 | - | 11 | 11 | 4.8 |
| Block (C) | Proportion | (wt.%) | 55 | 55 | 64 | 64 | 64 |
| | Ethylene Content | (wt.%) | 34 | 34 | 25 | 50* | 25 |
| Copolymer | MFR | (g/10 min.) | 0.7 | 0.8 | 0.4 | 0.3 | 0.4 |
| Crosslinked product | MFR | (g/10 min.) | 0.07 | 0.09 | 0.03 | 0.02 | 0.03 |
| | Gel Percentage | (wt.%) | 24 | 20 | 30 | 33 | 29 |
| Physical Properties of sheet | Hardness | (-) | 94 | 97 | 81 | 80 | 81 |
| | Tensile Strength at Rupture | (kg/cm²) | 200 | 180 | 130 | 95* | 125 |
| | Tensile Elongation at Rupture | (%) | 670 | 360* | 760 | 650 | 770 |
| | Izod Impact Strength (-40°C) | (kg·cm/cm) | NB | NB | NB | NB | NB |
| | Compression Set | (%) | 55 | 57 | 52 | 51 | 61* |
| Press Molded Sheets | Gloss | (%) | 56 | 54 | 72 | 71 | 72 |
| | Gloss Change | (%) | 63 | 64 | 60 | 58 | 14* |

Mark    *:   stands for products departing from the presently claimed scope or having unsatisfactory physical properties.

NB:   No Rupture

EP 0 274 906 B1

Table 3

| Experimental Example | | | Exam. C1 | Exam. C2 | Comp. Exam. C6 | Exam. C3 | Exam. C4 | Comp. Exam. C7 | Comp. Exam. C8 |
|---|---|---|---|---|---|---|---|---|---|
| Block (A) | Proportion | (wt.%) | 27 | 33 | 44 | 33 | 22 | 22 | 4* |
| | MFR | (g/10 min.) | 0.94 | 21 | 23 | 1.3 | 1.2 | 1.2 | 1.3 |
| Block (B) | Proportion | (wt.%) | 18 | 15 | 0* | 16 | 14 | 14 | 32* |
| | Ethylene Content | (wt.%) | 5.1 | 6.1 | - | 15 | 11 | 11 | 4.8 |
| Block (C) | Proportion | (wt.%) | 55 | 52 | 56 | 51 | 64 | 64 | 64 |
| | Ethylene Content | (wt.%) | 33 | 35 | 35 | 35 | 25 | 50* | 25 |
| Copolymer | MFR | (g/10 min.) | 0.4 | 2.4 | 2.2 | 0.3 | 0.16 | 0.12 | 0.20 |
| Crosslinked product | MFR | (g/10 min.) | 0.10 | 1.1 | 1.4 | 0.16 | 0.02 | 0.01 | 0.02 |
| | Gel Percentage | (wt.%) | 29 | 11 | 9 | 21 | 30 | 33 | 28 |
| Physical Properties of sheet | Hardness | (-) | 93 | 95 | 97 | 91 | 81 | 80 | 81 |
| | Tensile Strength at Rupture | (kg/cm$^2$) | 195 | 290 | 260 | 200 | 130 | 95* | 125 |
| | Tensile Elongation at Rupture | (%) | 650 | 790 | 430* | 780 | 760 | 660 | 770 |
| | Izod Impact Strength (-40°C) | (kg·cm/cm) | NB | NB | NB | NB | NB | NB | NB |
| | Compression Set | (%) | 55 | 60 | 61 | 58 | 50 | 53 | 61* |
| Press Molded Sheets | Gloss | (%) | 56 | 68 | 59 | 73 | 72 | 71 | 72 |
| | Gloss Change | (%) | 63 | 66 | 67 | 48 | 60 | 58 | 14* |

Mark *: stands for products departing from the presently claimed scope or having unsatisfactory physical properties.

NB: No Rupture

## Claims

1. A method for the production of crosslinked olefinic block copolymers, which comprises:
   preparing, with the use of a Ziegler type catalyst, an olefinic block copolymer which comprises 5 to

21

45% by weight of a propylene homopolymer block A, 5 to 25% by weight of a binary random copolymer block B of propylene-ethylene having an ethylene content of at least 3% by weight to below 20% by weight and 50 to 90% by weight of a binary random copolymer block C of propylene-ethylene having an ethylene content of 20 to 40% by weight, and in which the proportion of block A in the block combination of A and B is 50 to 90% by weight, said catalyst being a catalyst selected from the group consisting of a Ziegler type catalyst comprising as the main components (i) a titanium trichloride composition obtained by reducing titanium tetrachloride with an organoaluminum compound and treating the thus reduced product with a complexing agent and (ii) an organoaluminum compound and a Ziegler type catalyst containing as the main components (i) a solid composition containing magnesium, titanium and a halogen as the essential components, (ii) an electron donor and (iii) an organoaluminum compound; and

kneading and thereby crosslinking the obtained block copolymer with an organic peroxide, a divinyl compound and an antioxidant at a temperature of 230°C or lower, thereby to obtain a crosslinked product containing a component insoluble in hot xylene in an amount of 5 to 50% by weight.

2. A method as defined in Claim 1, wherein the process for preparing said block copolymer involves the steps of firstly preparing said polymer block A, subsequently preparing said copolymer block B and finally preparing said copolymer block C.

3. A method as defined in Claim 1, wherein, in said block copolymer obtained by copolymerization, the content of said polymer block A is 50 to 80% by weight of the total weight of said polymer block A and said copolymer block B.

4. A method as defined in Claim 1, wherein the molecular weight of said block copolymer obtained by copolymerization is 0.02 to 50 g/10 min., as expressed in terms of MFR according to ASTM-D-1238(L).

5. A method as defined in Claim 1, wherein the mean molecular weight of said block copolymer obtained by copolymerization is 0.05 to 20 g/10 min., as expressed in terms of MFR according to ASTM-D-1238-(L).

6. A method as defined in Claim 1, wherein the mean molecular weight of said block copolymer obtained by copolymerization is 0.1 to 15 g/10 min., as expressed in terms of MFR according to ASTM-D-1238-(L).

7. A method as defined in Claim 1, wherein said copolymer block B of said block copolymer has an ethylene content of 4 to 17% by weight.

8. A method as defined in Claim 1, wherein said copolymer block B of said block copolymer has an ethylene content of 5 to 15% by weight.

9. A method as defined in Claim 1, wherein the amount of said organic peroxide added for said crosslinking is 0.05 to 0.5 part by weight per 100 parts by weight of said block copolymer.

10. A method as defined in Claim 1, wherein the amount of said organic peroxide added for said crosslinking is 0.08 to 0.3 part by weight per 100 parts by weight of said block copolymer.

11. A method as defined in Claim 1, wherein the amount of said antioxidant added with said organic peroxide for said crosslinking is 0.05 to 0.5 part by weight per 100 parts by weight of said block copolymer.

12. A method as defined in Claim 1, wherein the amount of said antioxidant added with said organic peroxide for said crosslinking is 0.1 to 0.3 part by weight per 100 parts by weight of said block copolymer.

13. A method as defined in Claim 1, wherein, for said crosslinking, divinylbenzene is used with said organic peroxide in an amount of 0.05 to 1.0 part by weight per 100 parts by weight of said block copolymer.

**14.** A method as defined in Claim 1, wherein for said crosslinking, divinylbenzene is used with said organic peroxide in an amount of 0.1 to 0.5 part by weight per 100 parts by weight of said block copolymer.

**15.** A method as defined in Claim 1, wherein the temperature for said crosslinking is 160 to 220°C.

**16.** A method as defined in Claim 1, wherein, after said crosslinking, said block copolymer shows flow properties of 0.01 to 30, as measured according to ASTM-D-1238(L).

**17.** A method as defined in Claim 1, wherein, after said crosslinking, said block copolymer shows flow properties of 0.01 to 20, as measured according to ASTM-D-1238(L).

**18.** A method as defined in Claim 1, wherein, after said crosslinking, said block copolymer shows flow properties of 0.01 to 10, as measured according to ASTM-D-1238(L).

**19.** A method of the production of olefinic block copolymers as defined in Claim 1, wherein:
(I) the catalyst used is a Ziegler type catalyst comprising as the main components thereof a titanium trichloride composition obtained by reducing titanium tetrachloride with an organoaluminum compound and treating the reduced product with a complexing agent, and an organoaluminum compound;
(II) with said catalyst, an olefinic block copolymer is prepared, which comprises 5 to 20% by weight of a propylene homopolymer block A, 5 to 15% by weight of a binary random copolymer block B of propylene-ethylene having an ethylene content of at least 3 % by weight to below 20% by weight and 70 to 90% by weight of a binary random copolymer block C of propylene-ethylene having an ethylene content of 20 to 40% by weight, and in which the proportion of the block A in the block combination of A and B is 50 to 90% by weight; and
(III) a crosslinked product containing a component insoluble in hot xylenes in an amount of 5 to 50% by weight is obtained by kneading and thereby crosslinking the obtained block copolymer with an organic peroxide, a divinyl compound and an antioxidant at a temperature of 230°C or lower.

**20.** A method as defined in Claim 19, wherein said block copolymer obtained by copolymerization contains 5 to 20% by weight of said copolymer block A.

**21.** A method as defined in Claim 19, wherein said block copolymer obtained by copolymerization contains 7 to 18% by weight of said polymer block A.

**22.** A method as defined in Claim 19, wherein said block copolymer obtained by copolymerization contains 5 to 15% by weight of said copolymer block B.

**23.** A method as defined in Claim 19, wherein said block copolymer obtained by copolymerization contains 7 to 15% by weight of said copolymer block B.

**24.** A method as defined in Claim 19, wherein said block copolymer obtained by copolymerization contains 70 to 90% by weight of said copolymer block C.

**25.** A method as defined in Claim 19, wherein said block copolymer obtained by copolymerization contains 70 to 85% by weight of said copolymer block C.

**26.** A method as defined in Claim 19, wherein, after the crosslinking treatment, said block copolymer contains 10 to 40% by weight of a component insoluble in hot xylene.

**27.** A method as defined in Claim 19, wherein, after the crosslinking treatment, said block copolymer contains 10 to 35% by weight of a component insoluble in hot xylene.

**28.** A method for the production of crosslinked olefinic block copolymers, which comprises:
preparing, with the use of a Ziegler type catalyst, an olefinic block copolymer which comprises 15 to 45% by weight of a propylene homopolymer block A, 5 to 25% by weight of a binary random copolymer block B of propylene-ethylene having an ethylene content of at least 3% by weight to below 20% by weight and at least 50% by weight to below 70% by weight of a binary random copolymer block C of propylene-ethylene having an ethylene content of 20 to 40% by weight, and in which the proportion of the block A in the block combination of A and B is 50 to 90% by weight, said catalyst being a catalyst selected from the group consisting of a Ziegler type catalyst comprising as the main components (i) a titanium trichloride composition obtained by reducing titanium tetrachloride with an organoaluminum compound and treating the thus reduced product with a complexing agent and (ii) an organoaluminum compound and a Ziegler type catalyst containing as the main components (i) a solid composition containing magnesium, titanium and a halogen as the essential components, (ii) an electron donor and (iii) an organoaluminum compound; and

kneading and thereby crosslinking the obtained block copolymer with an organic peroxide, a divinyl compound and an antioxidant at a temperature of 230°C or lower thereby to obtain a crosslinked product containing a component insoluble in hot xylene in an amount of 5 to 40% by weight.

29. A method as defined in Claim 28, wherein said block copolymer obtained by copolymerization contains 15 to 45% by weight of said copolymer block A.

30. A method as defined in Claim 28, wherein said block copolymer obtained by copolymerization contains 17 to 33% by weight of said polymer block A.

31. A method as defined in Claim 28, wherein said block copolymer obtained by copolymerization contains 5 to 25% by weight of said copolymer block B.

32. A method as defined in Claim 28, wherein said block copolymer obtained by copolymerization contains 10 to 25% by weight of said copolymer block B.

33. A method as defined in Claim 28, wherein said block copolymer obtained by copolymerization contains 50 to 65% by weight of said copolymer block C.

34. A method as defined in Claim 28, wherein, after the crosslinking treatment, said block copolymer contains 8 to 35% by weight of a component insoluble in hot xylene.

35. A method as defined in Claim 28, wherein, after the crosslinking treatment, said block copolymer contains 10 to 30% by weight of a component insoluble in hot xylene.

**Patentansprüche**

1. Verfahren zur Herstellung vernetzter Blockcopolymerer von Olefinen, umfassend die folgenden Maßnahmen:

unter Verwendung eines Ziegler-Katalysators Zubereitung eines Olefin-Blockcopolymeren, das 5 bis 45 Gewichtsprozent eines Propylenhomopolymerenblocks A, 5 bis 25 Gewichtsprozent eines binären statistischen Propylen-Ethylen-Coplymerenblocks B mit einem Ethylengehalt von mindestens 3 Gewichtsprozent bis unterhalb 20 Gewichtsprozent und 50 bis 90 Gewichtsprozent eines binären statistischen Propylen-Ethylen-Copolymerenblocks C mit einem Ethylengehalt von 20 bis 40 Gewichtsprozent enthält und in dem der Anteil des Blocks A in der Blockkombination von A und B 50 bis 90 Gewichtsprozent beträgt;

wobei der Katalysator ein Katalysator aus der Gruppe ist, bestehend aus einem Ziegler-Katalysator umfassend als Hauptbestandteile (i) eine Titantrichloridzusammensetzung erhalten durch Reduktion von Titantrichlorid mit einer aluminiumorganischen Verbindung und Behandlung des Reduktionsprodukts mit einem Komplexbildner und (ii) eine aluminiumorganische Verbindung und aus einem Ziegler-Katalysator enthaltend als Hauptbestandteile (i) eine Feststoffzusammensetzung enthaltend Magnesium, Titan und ein Halogen als Hauptkomponenten, (ii) einen Elektronendonator und (iii) eine alumiumorganische Verbindung; und

Kneten und dadurch Vernetzen des erhaltenen Blockcopolymeren mit einem organischen Peroxid, einer Divinylverbindung und einem Antioxidationsmittel bei einer Temperatur von 230 °C oder niedriger, wodurch man ein Vernetzungsprodukt enthaltend eine in heißem Xylol unlösliche Komponente in einem Anteil von 5 bis 50 Gewichtsprozent erhält.

2. Verfahren nach Anspruch 1, wonach das Verfahren zur Zubereitung des Blockcopolymeren die Stufen umfaßt, zunächst den Polymerenblock A, danach den Copolymerenblock B und schließlich den

24

EP 0 274 906 B1

Copolymerenblock C herzustellen.

3. Verfahren nach Anspruch 1, wonach in dem durch Copolymerisation erhaltenen Blockcopolymeren der Anteil des Polymerenblocks A 50 bis 80 Gewichtsprozent des Gesamtgewichts des Polymerenblocks A und des Copolymerenblocks B beträgt.

4. Verfahren nach Anspruch 1, wonach das Molekulargewicht des durch Copolymerisation erhaltenen Blockcopolymeren 0,02 bis 50 g/10min, ausgedrückt als MFR-Schmelzindex nach ASTM-D-1238(L) beträgt.

5. Verfahren nach Anspruch 1, wonach das mittlere Molekulargewicht des durch Copolymerisation erhaltenen Blockcopolymeren 0,05 bis 20 g/10min, ausgedrückt als MFR-Schmelzindex nach ASTM-D-1238(L) beträgt.

6. Verfahren nach Anspruch 1, wonach das mittlere Molekulargewicht des durch Copolymerisation erhaltenen Blockcopolymeren 0,1 bis 15 g/10min, ausgedrückt als MFR-Schmelzindex nach ASTM-D-1238(L) beträgt.

7. Verfahren nach Anspruch 1, wonach der Copolymerenblock B des Blockcopolymeren einen Ethylenanteil von 4 bis 17 Gewichtsprozent hat.

8. Verfahren nach Anspruch 1, wonach der Copolymerenblock B des Blockcopolymeren einen Ethylenanteil von 5 bis 15 Gewichtsprozent hat.

9. Verfahren nach Anspruch 1, wonach der Anteil des für die Vernetzung zugesetzten organischen Peroxids 0,05 bis 0,5 Gewichtsteile pro 100 Gewichtsteile des Blockcopolymeren beträgt.

10. Verfahren nach Anspruch 1, wonach der Anteil des für die Vernetzung zugesetzten organischen Peroxids 0,08 bis 0,3 Gewichtsteile pro 100 Gewichtsteile des Blockcopolymeren beträgt.

11. Verfahren nach Anspruch 1, wonach der Anteil des zusammen mit dem organischen Peroxid für die Vernetzung zugesetzten Antioxidationsmittels 0,05 bis 0,5 Gewichtsteile pro 100 Gewichtsteile des Blockcopolymeren beträgt.

12. Verfahren nach Anspruch 1, wonach der Anteil des zusammen mit dem organischen Peroxid für die Vernetzung zugesetzten Antioxidationsmittels 0,1 bis 0,3 Gewichtsteile pro 100 Gewichtsteile des Blockcopolymeren beträgt.

13. Verfahren nach Anspruch 1, wonach für die Vernetzung zusammen mit dem organischen Peroxid Divinylbenzol in einem Anteil von 0,05 bis 1,0 Gewichtsteilen pro 100 Gewichtsteile des Blockcopolymeren benutzt wird.

14. Verfahren nach Anspruch 1, wonach für die Vernetzung zusammen mit dem organischen Peroxid Divinylbenzol in einem Anteil von 0,1 bis 0,5 Gewichtsteilen pro 100 Gewichtsteile des Blockcopolymeren benutzt wird.

15. Verfahren nach Anspruch 1, wonach die Vernetzungstemperatur 160 bis 220 ° C beträgt.

16. Verfahren nach Anspruch 1, wonach das Blockcopolymere nach der Vernetzung Fließwerte von 0,01 bis 30 nach ASTM-D-1238(L) hat.

17. Verfahren nach Anspruch 1, wonach das Blockcopolymere nach der Vernetzung Fließwerte von 0,01 bis 20 nach ASTM-D-1238(L) hat.

18. Verfahren nach Anspruch 1, wonach das Blockcopolymere nach der Vernetzung Fließwerte von 0,01 bis 10 nach ASTM-D-1238(L) hat.

19. Verfahren zur Herstellung eines Blockcopolymeren von Olefinen nach Anspruch 1, wonach:

25

(I) der benutzte Katalysator ein Ziegler-Katalysator ist, umfassend als Hauptbestandteile eine Titantrichloridzusammensetzung, erhalten durch Reduktion von Titantetrachlorid mit einer aluminiumorganischen Verbindung und Behandlung des Reduktionsprodukts mit einem Komplexbildner, und eine aluminiumorganische Verbindung,

(II) mit diesem Katalysator ein Olefinblockcopolymer zubereitet wird, das 5 bis 20 Gewichtsprozent eines Propylenhomopolymerenblocks A, 5 bis 15 Gewichtsprozent eines binären statistischen Propylen-Ethylen-Copolymerenblocks B mit einem Ethylengehalt von mindestens 3 Gewichtsprozent bis weniger als 20 Gewichtsprozent und 70 bis 90 Gewichtsprozent eines Propylen-Ethylen-Copolymerenblocks C mit einem Ethylengehalt von 20 bis 40 Gewichtsprozent enthält und in dem der Anteil des Blocks A in der Blockkombination von A und B 50 bis 90 Gewichtsprozent beträgt; und

(III) durch Kneten und dadurch Vernetzen des erhaltenen Blockcopolymeren mit einem organischen Peroxid, einer Divinylverbindung und einem Antioxidationsmittel bei einer Temperatur von 230 °C oder weniger ein Vernetzungsprodukt, enthaltend eine in heißem Xylol unlösliche Komponente in einem Anteil von 5 bis 50 Gewichtsprozent, erhalten wird.

20. Verfahren nach Anspruch 19, wonach das durch Copolymerisation erhaltene Blockcopolymere 5 bis 20 Gewichtsprozent des Copolymerenblocks A enthält.

21. Verfahren nach Anspruch 19, wonach das durch Copolymerisation erhaltene Blockcopolymere 7 bis 18 Gewichtsprozent des Polymerenblocks A enthält.

22. Verfahren nach Anspruch 19, wonach das durch Copolymerisation erhaltene Blockcopolymere 5 bis 15 Gewichtsprozent des Copolymerenblocks B enthält.

23. Verfahren nach Anspruch 19, wonach das durch Copolymerisation erhaltene Blockcopolymere 7 bis 15 Gewichtsprozent des des Copolymerenblocks B enthält.

24. Verfahren nach Anspruch 19, wonach das durch Copolymerisation erhaltene Blockcopolymere 70 bis 90 Gewichtsprozent des Copolymerenblocks C enthält.

25. Verfahren nach Anspruch 19, wonach das durch Copolymerisation erhaltene Blockcopolymere 70 bis 85 Gewichtsprozent des Copolymerenblocks C enthält.

26. Verfahren nach Anspruch 19, wonach nach Abschluß der Vernetzungsbehandlung das Blockcopolymere 10 bis 40 Gewichtsprozent einer in heißem Xylol unlöslichen Komponente enthält.

27. Verfahren nach Anspruch 19, wonach nach Abschluß der Vernetzungsbehandlung das Blockcopolymere 10 bis 35 Gewichtsprozent einer in heißem Xylol unlöslichen Komponente enthält.

28. Verfahren zur Herstellung eines vernetzten Blockcopolymeren von Olefinen, umfassend die folgenden Maßnahmewn:

unter Verwendung eines Ziegler-Katalysators Zubereitung eines Olefin-Blockcopolymeren, das 15 bis 45 Gewichtsprozent eines Propylenhomopolymerenblocks A, 5 bis 25 Gewichtsprozent eines binären statistischen Propylen-Ethylen-Copolymerenblocks B mit einem Ethylengehalt von mindestens 3 Gewichtsprozent bis unterhalb 20 Gewichtsprozent und mindesten 50 bis unter 70 Gewichtsprozent eines binären statistischen Propylen-Ethylen-Copolymerenblocks C mit einem Ethylengehalt von 20 bis 40 Gewichtsprozent enthält und in dem der Anteil des Blocks A in der Blockkombination von A und B 50 bis 90 Gewichtsprozent beträgt;

wobei der Katalysator ein Katalysator aus der Gruppe ist, bestehend aus einem Ziegler-Katalysator umfassend als Hauptbestandteile (i) eine Titantrichloridzusammensetzung erhalten durch Reduktion von Titantrichlorid mit einer aluminiumorganischen Verbindung und Behandlung des Reduktionsprodukts mit einem Komplexbildner und (ii) eine aluminiumorganische Verbindung und aus einem Ziegler-Katalysator enthaltend als Hauptbestandteile: (i) eine Feststoffzusammensetzung enthaltend Magnesium, Titan und ein Halogen als Hauptkomponenten, (ii) einen Elektronendonator und (iii) eine alumiumorganische Verbindung; und

Kneten und dadurch Vernetzen des erhaltenen Blockcopolymeren mit einem organischen Peroxid, einer Divinylverbindung und einem Antioxidationsmittel bei einer Temperatur von 230 °C oder niedriger, wodurch man ein Vernetzungsprodukt enthaltend eine in heißem Xylol unlösliche Komponente in einem Anteil von 5 bis 40 Gewichtsprozent erhält.

29. Verfahren nach Anspruch 28, wonach das durch Copolymerisation erhaltene Blockcopolymere 15 bis 45 Gewichtsprozent des Copolymerenblocks A enthält.

30. Verfahren nach Anspruch 28, wonach das durch Copolymerisation erhaltene Blockcopolymere 17 bis 33 Gewichtsprozent des Polymerenblocks A enthält.

31. Verfahren nach Anspruch 28, wonach das durch Copolymerisation erhaltene Blockcopolymere 5 bis 25 Gewichtsprozent des Copolymerenblocks B enthält.

32. Verfahren nach Anspruch 28, wonach das durch Copolymerisation erhaltene Blockcopolymere 10 bis 25 Gewichtsprozent des Copolymerenblocks B enthält.

33. Verfahren nach Anspruch 28, wonach das durch Copolymerisation erhaltene Blockcopolymere 50 bis 65 Gewichtsprozent des Copolymerenblocks C enthält.

34. Verfahren nach Anspruch 28, wonach nach Abschluß der Vernetzungsbehandlung das Blockcopolymere 8 bis 35 Gewichtsprozent einer in heißem Xylol unlöslichen Komponente enthält.

35. Verfahren nach Anspruch 28, wonach nach Abschluß der Vernetzungsbehandlung das Blockcopolymere 10 bis 30 Gewichtsprozent einer in heißem Xylol unlöslichen Komponenee enthält.

**Revendications**

1. Procédé de fabrication de copolymères séquencés oléfiniques réticulés, qui comprend :
   - la préparation, l'aide d'un catalyseur de type Ziegler, d'un copolymère séquencé oléfinique qui comprend 5 à 45% en poids d'une séquence A d'homopolymère de propylène, 5 à 25% en poids d'une séquence B de copolymère statistique binaire de propylène-éthylène ayant une teneur en éthylène d'au moins 3% en poids jusqu'à une valeur inférieure à 20% en poids et 50% à 90% en poids d'une séquence C d'un copolymère statistique binaire de propylène-éthylène ayant une teneur en éthylène de 20 à 40% en poids, et dans lequel la proportion de la séquence A dans la combinaison de séquences de A et B est de 50 à 90% en poids, ledit catalyseur étant un catalyseur choisi dans le groupe constitué par un catalyseur de type Ziegler comprenant, comme composants principaux, (i) une composition de trichlorure de titane obtenue par réduction du tétrachlorure de titane avec un composé organo-aluminique et traitement du produit ainsi réduit par un agent complexant et (ii) un composé organo-aluminique et un catalyseur de type Ziegler contenant, comme composants principaux, (i) une composition solide contenant du magnésium, du titane et un halogène comme composants essentiels, (ii) un donneur d'électrons et (iii) un composé organo-aluminique ; et
   - le malaxage et, par là, la réticulation du copolymère séquencé obtenu, avec un peroxyde organique, un composé divinylique et un anti-oxydant, à une température de 230°C ou au-dessous, pour obtenir de cette façon un produit réticulé contenant un composant insoluble dans le xylène chaud dans une quantité de 5 à 50% en poids.

2. Procédé selon la revendication 1, dans lequel le procédé de préparation dudit copolymère séquencé met en jeu les étapes consistant tout d'abord à préparer ladite séquence polymère A, puis à préparer ladite séquence copolymère B et enfin à préparer ladite séquence copolymère C.

3. Procédé selon la revendication 1, dans lequel, dans ledit copolymère séquencé obtenu par copolymérisation, la teneur de ladite séquence polymère A est de 50 à 80% en poids du poids total de ladite séquence polymère A et de ladite séquence copolymère B.

4. Procédé selon la revendication 1, dans lequel la masse moléculaire dudit copolymère séquencé obtenu par copolymérisation est de 0,02 à 50 g/10 min., telle qu'exprimée en termes de MFR conformément à ASTM-D-1238(L).

**5.** Procédé selon la revendication 1, dans lequel la masse moléculaire moyenne dudit copolymère séquencé obtenu par copolymérisation est de 0,05 à 20 g/10 min., telle qu'exprimée en termes de MFR conformément à ASTM-D-1238(L).

**6.** Procédé selon la revendication 1, dans lequel la masse moléculaire moyenne dudit copolymère séquencé obtenu par copolymérisation est de 0,1 à 15 g/10 min., telle qu'exprimée en termes de MFR conformément à ASTM-D-1238(L).

**7.** Procédé selon la revendication 1, dans lequel ladite séquence copolymère B dudit copolymère séquencé a une teneur en éthylène de 4 à 17% en poids.

**8.** Procédé selon la revendication 1, dans lequel ladite séquence copolymère B dudit copolymère séquencé a une teneur en éthylène de 5 à 15% en poids.

**9.** Procédé selon la revendication 1, dans lequel la quantité dudit peroxyde organique ajouté pour ladite réticulation est de 0,05 à 0,5 partie en poids pour 100 parties en poids dudit copolymère séquencé.

**10.** Procédé selon la revendication 1, dans lequel la quantité dudit peroxyde organique ajouté pour ladite réticulation est de 0,08 à 0,3 partie en poids pour 100 parties en poids dudit copolymère séquencé.

**11.** Procédé selon la revendication 1, dans lequel la quantité dudit anti-oxydant ajouté avec ledit peroxyde organique pour ladite réticulation est de 0,05 à 0,5 partie en poids pour 100 parties en poids dudit copolymère séquencé.

**12.** Procédé selon la revendication 1, dans lequel la quantité dudit anti-oxydant ajouté avec ledit peroxyde organique pour ladite réticulation est de 0,1 à 0,3 partie en poids pour 100 parties en poids dudit copolymère séquencé.

**13.** Procédé selon la revendication 1, dans lequel, pour ladite réticulation, du divinylbenzène est utilisé avec ledit peroxyde organique dans une quantité de 0,05 à 1,0 partie en poids pour 100 parties en poids dudit copolymère séquencé.

**14.** Procédé selon la revendication 1, dans lequel, pour ladite réticulation, du divinylbenzène est utilisé avec ledit peroxyde organique dans une quantité de 0,1 à 0,5 partie en poids pour 100 parties en poids dudit copolymère séquencé.

**15.** Procédé selon la revendication 1, dans lequel la température de ladite réticulation est de 160 à 220°C.

**16.** Procédé selon la revendication 1, dans lequel, après ladite réticulation, ledit copolymère séquencé manifeste des propriétés d'écoulement de 0,01 à 30, telles que mesurées conformément à ASTM-D-1238(L).

**17.** Procédé selon la revendication 1, dans lequel, après ladite réticulation, ledit copolymère séquencé manifeste des propriétés d'écoulement de 0,01 à 20, telles que mesurées conformément à ASTM-D-1238(L).

**18.** Procédé selon la revendication 1, dans lequel, après ladite réticulation, ledit copolymère séquencé manifeste des propriétés d'écoulement de 0,01 à 10, telles que mesurées conformément à ASTM-D-1238(L).

**19.** Procédé de fabrication de copolymères séquencés oléfiniques tels que définis à la revendication 1, dans lequel:
(I) le catalyseur utilisé est un catalyseur de type Ziegler comprenant, en tant que ses composants principaux, une composition de trichlorure de titane obtenue par réduction de tétrachlorure de titane par un composé organo-aluminique et traitement du produit réduit par un agent complexant, et un composé organo-aluminique ;
(II) avec ledit catalyseur, un copolymère séquencé oléfinique est préparé, lequel comprend 5 à 20% en poids d'une séquence A d'homopolymère de propylène, 5 à 15% en poids d'une séquence B d'un copolymère statistique binaire de propylène-éthylène ayant une teneur en éthylène d'au moins 3% en poids jusqu'à une valeur inférieure à 20% en poids et 70 à 90% en poids d'une séquence C de copolymère statistique binaire de propylène-éthylène ayant une teneur en éthylène de 20 à 40% en poids, et dans lequel la proportion de la séquence A dans la combinaison de séquences de A et B est de 50 à 90% en poids ; et

(III) un produit réticulé contenant un composant insoluble dans les xylènes chauds dans une quantité de 5 à 50% en poids est obtenu par malaxage et, par là, réticulation du copolymère séquencé obtenu, avec un peroxyde organique, un composé divinylique et un anti-oxydant à une température de 230°C ou au-dessous.

20. Procédé selon la revendication 19, dans lequel ledit copolymère séquencé obtenu par copolymérisation contient 5 à 20% en poids de ladite séquence polymère A.

21. Procédé selon la revendication 19, dans lequel ledit copolymère séquencé obtenu par copolymérisation contient 7 à 18% en poids de ladite séquence polymère A.

22. Procédé selon la revendication 19, dans lequel ledit copolymère séquencé obtenu par copolymérisation contient 5 à 15% en poids de ladite séquence copolymère B.

23. Procédé selon la revendication 19, dans lequel ledit copolymère séquencé obtenu par copolymérisation contient 7 à 15% en poids de ladite séquence copolymère B.

24. Procédé selon la revendication 19, dans lequel ledit copolymère séquencé obtenu par copolymérisation contient 70 à 90% en poids de ladite séquence copolymère C.

25. Procédé selon la revendication 19, dans lequel ledit copolymère séquencé obtenu par copolymérisation contient 70 à 85% en poids de ladite séquence copolymère C.

26. Procédé selon la revendication 19, dans lequel, après le traitement de réticulation, ledit copolymère séquencé contient 10 à 40% en poids d'un composant insoluble dans le xylène chaud.

27. Procédé selon la revendication 19, dans lequel, après le traitement de réticulation, ledit copolymère séquencé contient 10 à 35% en poids d'un composant insoluble dans le xylène chaud.

28. Procédé de fabrication de copolymères séquencés oléfiniques réticulés, qui comprend :
- la préparation, à l'aide d'un catalyseur de type Ziegler, d'un copolymère séquencé oléfinique qui comprend 15 à 45% en poids d'une séquence A d'homopolymère de propylène, 5 à 25% en poids d'une séquence B de copolymère statistique binaire de propylène-éthylène ayant une teneur en éthylène d'au moins 3% en poids jusqu'à une valeur inférieure à 20% en poids et au moins 50% en poids jusqu'à une valeur inférieure à 70% en poids d'une séquence C de copolymère statistique binaire de propylène-éthylène ayant une teneur en éthylène de 20 à 40% en poids, et dans lequel la proportion de la séquence A dans la combinaison de séquences de A et B est de 50 à 90% en poids, ledit catalyseur étant un catalyseur choisi dans le groupe constitué par un catalyseur de type Ziegler comprenant, comme composants principaux, (i) une composition de trichlorure de titane obtenue par réduction de tétrachlorure de titane par un composé organo-aluminique et traitement du produit ainsi réduit par un agent complexant et (ii) un composé organo-aluminique, et un catalyseur de type Ziegler contenant, comme composants principaux, (i) une composition solide contenant du magnésium, du titane et un halogène comme composants essentiels, (ii) un donneur d'électrons et (iii) un composé organo-aluminique ; et
- le malaxage et, par là, la réticulation du copolymère séquencé obtenu, avec un peroxyde organique, un composé divinylique et un anti-oxydant à une température de 230°C ou au-dessous, pour obtenir de cette façon un produit réticulé contenant un composant insoluble dans le xylène chaud dans une quantité de 5 à 40% en poids.

29. Procédé selon la revendication 28, dans lequel ledit copolymère séquencé obtenu par copolymérisation contient 15 à 45% en poids de ladite séquence polymère A.

**30.** Procédé selon la revendication 28, dans lequel ledit copolymère séquencé obtenu par copolymérisation contient 17 à 33% en poids de ladite séquence polymère A.

**31.** Procédé selon la revendication 28, dans lequel ledit copolymère séquencé obtenu par copolymérisation contient 5 à 25% en poids de ladite séquence copolymère B.

**32.** Procédé selon la revendication 28, dans lequel ledit copolymère séquencé obtenu par copolymérisation contient 10 à 25% en poids de ladite séquence copolymère B.

**33.** Procédé selon la revendication 28, dans lequel ledit copolymère séquencé obtenu par copolymérisation contient 50 à 65% en poids de ladite séquence copolymère C.

**34.** Procédé selon la revendication 28, dans lequel, après le traitement de réticulation, ledit copolymère séquencé contient 8 à 35% en poids d'un composant insoluble dans le xylène chaud.

**35.** Procédé selon la revendication 28, dans lequel, après le traitement de réticulation, ledit copolymère séquencé contient 10 à 30% en poids d'un composant insoluble dans le xylène chaud.